# EUROPEAN PATENT SPECIFICATION

(11) **EP 2 090 335 B1**
(45) Date of publication and mention of the grant of the patent: **04.05.2016**
(21) Application number: 08151305.3
(22) Date of filing: 12.02.2008
(51) Int. Cl.: A62B 7/14

(54) **Oxygen breathing device**
Sauerstoffatmungsvorrichtung
Dispositif respiratoire à oxygène

(43) Date of publication of application: 19.08.2009
(73) Proprietor: Zodiac Aerotechnics, 78370 Plaisir (FR)
(72) Inventor: Rittner, Wolfgang, 23623, Siblin (DE); Meckes, Rüdiger, 23919, Berkenthin (DE); Boomgarden, Günter, 23684, Scharbeutz (DE)
(74) Representative: Eisenführ Speiser

(56) References cited:
- WO-A-98/07082
- WO-A-2006/100094
- JP-A- 2003 092 433
- US-A1- 2006 054 740
- US-A1- 2007 144 597
- US-A1- 2007 215 159

## Description

The invention relates to an oxygen breathing device, in particular for providing oxygen to passengers or crew of an aircraft, the device comprising an oxygen source, wherein oxygen is stored, in particular in chemically bound form or compressed form, an oxygen guiding device for guiding oxygen from the oxygen source to a person, and a control unit for controlling pressure and/or flow rate of the oxygen flowing through the guiding device. A further aspect of the invention is a method for supplying oxygen to a person and a particular use of a peltier element in an oxygen breathing device as described beforehand.

Oxygen breathing devices of the aforementioned construction are used for a number of purposes where temporary or permanent supply of oxygen to a human person is necessary. A particular field of application of such oxygen breathing devices is the field of aircraft, wherein a pressure drop within an aircraft flying at high altitude may make it necessary to supply the passengers and the crew members with oxygen to ensure sufficient oxygen supply to these persons. Usually, an oxygen breathing device is provided for each crew member and passenger or a group thereof and is usually arranged above the passenger. In case of an emergency, such oxygen breathing device is activated, for example automatically by a cabin pressure monitoring system or manually by a crew member, whereafter an oxygen mask connected via a horse to an oxygen source falls from above the passenger downwards and can be used by the passenger. The flow of oxygen may be started automatically by activation of the system by the crew member or may be activated by a particular action undertaken by the passenger, e.g. by pulling the mask towards himself to thus activate the device by a pulling force transferred via the hose guiding the oxygen flow or an additional lanyard coupled to the oxygen mask.

A particular problem of such oxygen breathing devices is the need to control the pressure and/or the flow of the oxygen provided to the person. If too much or too little oxygen is provided to the person, this may cause severe damages to the person. Thus, usually a control unit is provided to control the flow and/or pressure of the oxygen. Such control unit may control the flow and/or pressure depending on the ambient pressure, the ambient oxygen content, the withdrawal of oxygen by the passenger or other input parameters.

Generally, it is known to drive such control unit using a drive energy supplied from an external energy source, in particular from the energy supply system of an aircraft in case where the oxygen breathing device is installed in such an aircraft. However, it is known that in particular cases such energy supply system of the aircraft may break down and thus control of the oxygen flow and/or pressure by the control unit may fail. Such breakdown is particularly relevant since often an emergency situation resulting from breakdown of particular systems within the aircraft is the reason behind the need to activate and drive the oxygen breathing device.

WO 98/07082 A discloses an apparatus and a method for controlling the output of an oxygen concentrator, wherein an oxygen sensor monitor and a circuit board receives a gas sample from an oxygen concentrator and converts the concentration of oxygen to a DC voltage in a range from 0 to 1 volt corresponding to 0 % to 100 % oxygen. Depending on this DC voltage a plurality of taps on an AC motor winding are selectively energized in response to the concentration of oxygen generated by the concentrator.

US2007/0144597A1 discloses an oxygen breathing device according to the preamble of claim 1.

To overcome the danger of breakdown of the control unit of the oxygen breathing device it is known to couple the control unit to an auxiliary emergency energy circuit within the aircraft. However, it is known that in serious damages to an aircraft even such auxiliary energy system may fail, thus inducing the same breakdown of the control unit as discussed beforehand.

A further problem associated with modern aircraft is the desire to provide an overall lightweight construction of the aircraft to reduce fuel consumption of the aircraft. It is to be understood that such lightweight construction may comprise a reduction of weight of structural components like wings of the aircraft but may also comprise a reduction of the weight of cabin interior elements, wiring and the like. It is an object of the invention to provide an oxygen breathing device allowing such lightweight construction of modern aircraft.

A still further object in design of modern aircraft is to allow efficient manufacturing and maintenance of the aircraft to reduce manufacturing and maintenance costs.

It is a still further object of the invention to provide an oxygen breathing device allowing such reduced manufacturing and maintenance costs.

The invention aims to provide an oxygen breathing device which overcomes the aforementioned drawbacks and provides better safety to a person supplied by the oxygen breathing device, in particular in case of a severe emergency situation.

According to a first aspect of the invention, this object is achieved by providing an oxygen breathing device as described in the introductory portion whereby an energy conversion and supply device is provided and is adapted to convert energy stored or produced within the oxygen breathing device into an energy required by the control unit, and provide said energy required by the control unit to the control unit.

According to the invention, the control unit is at least particularly provided with drive energy which is generated by converting energy stored or produced within the oxygen breathing device itself. Generally a number of possibilities are available to store or produce such energy within the device itself. In particular, the energy may be stored in the form of pressurized oxygen, whereby the pressure itself is converted into the drive energy by relaxation. Alternatively, the energy may be stored within the device in the form of one or more chemical substances which may undergo a chemical reaction or react with each other and provide energy by such chemical reaction. For example, such chemical reaction may be exothermic and thus provide thermal energy which can be converted into drive energy of the control unit via a variety of converting methods. Still further, oscillatory motion of the oxygen breathing device itself or parts of it, e.g. induced by vibration during flight of an aircraft or the like may be converted into the drive energy of the control unit.

A first advantage of the invention is that the oxygen breathing device may particularly or completely supply drive energy to the control unit from internally generated energy, thus avoiding or at least reducing the danger of breakdown of the control unit following breakdown of the onboard energy supply system of an aircraft. A second advantage of the oxygen breathing device according to the invention is that it is even independent from an auxiliary emergency energy supply system of such an aircraft and may thus be driven completely independent from such energy systems. By this, an independent oxygen breathing device can be provided to increase life safety for the person supplied by the oxygen breathing device.

A second advantage of the oxygen breathing device according to the invention is that it does not require an energy supply connection to the energy supply system of an aircraft, thus making it not necessary to provide extensive connecting elements or wiring. This may save weight of the overall aircraft and will further ease manufacturing of the aircraft since an independent, isolated oxygen breathing device only has to be installed close to each person which shall be provided with oxygen in case of emergency but no extensive wiring or the like is required for such system. In particular, the cross-section of any electrical connection to the oxygen breathing device according to the invention can be decreased significantly, thus saving significant weight of an aircraft, in particular in case of large aircrafts having multiple oxygen breathing devices. In a particular embodiment, the oxygen breathing device according to the invention may only be coupled to a central activating unit via a control wire having small cross-section to activate the oxygen breathing device and hereafter the oxygen breathing device will work independent from any wiring by converting independently the energy stored within the device to supply the control unit with drive energy.

According to a first preferred embodiment of the invention, said energy conversion and supply device is coupled to said control unit and adapted to provide said energy required by the control unit to the control unit. According to this embodiment, the energy which is converted into the drive energy for the control unit is stored within the oxygen source of the device. This embodiment is particularly preferred because the oxygen source may store such energy without the need to increase its weight and thus the stored energy does not effect any weight increase of the whole device. As discussed before, the energy may be stored in the form of one, two or more chemical substances which are able to react in an exothermic reaction or in the form of pressurized oxygen. In order to convert and supply the energy according to this embodiment, the energy conversion and supply device is coupled to the oxygen source as well as to the control unit. Such coupling may be effected mechanically, e.g. by providing thermal contact or in such a way to expose an element of the energy conversion and supply device to the pressure of flow resulting from the oxygen source or such coupling may be effected by electrical connections.

This preferred embodiment may be improved further in that said oxygen source is a chemical oxygen source comprising at least one or two components, said component(s) producing oxygen in a chemical reaction and wherein said energy conversion and supply device is adapted to convert heat energy generated by said chemical reaction the oxygen source into said energy required by the control unit to the control unit. In such an embodiment, one or more chemical reactive substance may be provided within the oxygen source and may be activated by an external activation action or by bringing the two substances in contact to each other to start a chemical reaction whereby one of the products of such reaction is oxygen which can be supplied to the person. Such reaction may be exothermic and thus produce heat energy which can be converted into drive energy of the control unit.

An example for such a conversion and supply device may be a peltier element which is in thermal contact to the oxygen source to transfer heat from the exothermic reaction within the oxygen source to the peltier element and to produce electrical energy produced within the peltier element from the temperature gradiant across the peltier element from the oxygen source to the ambient temperature and to supply such electrical energy to the control unit.

According to another preferred embodiment of the invention, said oxygen source is a pressurized oxygen source comprising oxygen in a pressurized state and wherein said energy conversion and supply device is adapted to convert pressure energy generated by relaxation of said pressurized oxygen into said drive energy required by the control unit to the control unit. According to this embodiment, the oxygen is stored within the pressurized oxygen source. Such storage of the oxygen is known to the skilled person and the oxygen may be stored at high pressure, thus allowing to convert the energy of such pressure by a mechanical device into drive energy for the control unit.

Such an embodiment can be further improved in that said generator is coupled to said turbine to be driven by said turbine, and coupled to said control unit to supply energy generated within said generator to said control unit. In this preferred embodiment, the energy conversion and supply device comprises a turbine which is coupled to the oxygen source in such a way that oxygen flowing from the oxygen source to the person is flowing through said turbine and is decompressed within said turbine, thus effecting rotation of a rotor within said turbine. The turbine may be a pelton turbine or an axial turbine, but generally all types of turbines may be used in this embodiment as long as constructive and functional requirements are met by the turbine. It is to be understood that the conversion of mechanical energy stored within the oxygen source by a pressurized oxygen may result in a production of a high amount of drive energy for the control unit initially after starting the oxygen supply to the person whereby the energy provided to the control unit may decrease in relation to the reduction of pressure within the oxygen source if oxygen supply to the person proceeds. Thus, such a preferred embodiment may further include an energy storage device, like a rechargeable battery pack, a capacitor or the like to store excess drive energy in the initial time period following start of the oxygen supply and to provide drive energy to the control unit from such energy storage device in a later time period of the oxygen supply, wherein the drive energy converted by the energy conversion and supply device may not be sufficient to drive the control unit.

According to a still further preferred embodiment of the invention, said energy conversion and supply device is adapted to convert energy produced by oscillatory motion of the oxygen breathing device or parts of it. According to this embodiment, an oscillatory motion of the whole oxygen breathing device or at least parts of it is converted into drive energy of the control unit.

The energy conversion and supply device may comprise a conversion unit which is adapted to convert such oscillatory motion exerted by the passenger or crew member who is supplied with oxygen by the device. Further, such conversion unit may comprise a crank, a push button, a handle to apply a shaking force or the like.

Further, it is known that during flight or ground transfer, in particular during starting and landing manoeuvres of an aircraft, significant vibrations are induced within the whole aircraft and induce significant oscillatory motion of any devices installed within the aircraft. According to this embodiment, such oscillatory motion may preferably be used to provide drive energy to the control unit. This may be done additionally or alternatively to the energy converted from manual input by the passenger or crew member as discussed before. It is to be understood, that according to this embodiment either the oscillatory motion which is present in case of an emergency may be converted into drive energy for the control unit, thus providing direct real-time energy supply to the control unit. However, it is particularly preferred, to provide a buffer storage device within the oxygen breathing device which may store drive energy for the control unit resulting from such conversion during manoeuvres of the aircraft before an emergency. By this, it can be ensured that an energy storage device is always in fully loaden state in case of an emergency since it is permanently charged via such energy conversion from oscillatory motion.

It is still further preferred, that said energy conversion and supply device is adapted to supply the converted energy to an energy storage device adapted to supply said control unit. As discussed before, such energy storage device is particularly preferred in case of an energy conversion and supply device which converts an oscillatory motion of the whole device or parts of it during regular flight or ground transfer conditions of an aircraft. However, it is to be understood that such energy storage device may be advantageous in a plurality of other preferred embodiments of the invention as well. The energy storage device may be a rechargeable battery pack, a condensator, a pressure buffer, a rotational weight storage device or the like.

Still further, it is preferred that said energy conversion and supply device is adapted to convert said energy stored in the oxygen source or produced by vibrations of the oxygen breathing device into electrical energy. According to this embodiment, electrical energy is provided by the energy conversion and supply device which is a form of energy that can be used for driving control devices known in the art.

In such case, it is particularly preferred, in case that an energy storage device is provided, that said energy storage device is a rechargeable battery pack. Such rechargeable battery pack can be provided in a lightweight construction for providing sufficient energy for the control unit over a long time.

According to a final preferred embodiment, said energy conversion and supply device is adapted to convert said energy stored in the oxygen source or produced by vibrations of the oxygen breathing device or parts of it into such an amount of energy, which is sufficient to independently drive said control unit. According to this preferred embodiment, the oxygen breathing device is adapted to work independently of an external energy source and thus is able to improve safety of the person supplied by the oxygen breathing device. In particular, such oxygen breathing device may only require a short initial signal to activate oxygen supply and may hereafter work self-sustaining and thus independently from any other systems on board of an aircraft. In such case, the cross-sections of any signal lines or supply lines to such oxygen breathing device may be significantly decreased when compared to prior art systems, thus allowing to significantly reduce overall weight of the aircraft.

According to a second aspect of the invention, a method for supplying oxygen to a person using an oxygen breathing device is provided, the method comprising the steps of providing an oxygen flow from an oxygen source, which is part of the oxygen breathing device, in particular by providing pressurized oxygen or oxygen resulting from a chemical reaction, controlling the flow and/or pressure of the oxygen flow in a control unit, which is part of the oxygen breathing device, supplying drive energy to said control unit for driving said control of the flow and/or pressure, guiding said oxygen flow with said controlled flow and/or pressure to said person, is provided, wherein energy stored or generated within said oxygen breathing device or parts of it is converted into said drive energy of said control unit. According to this method, the safety of oxygen supply to a person can be significantly improved. The method may in particular be accomplished using an oxygen breathing device as described beforehand.

The method may be further improved in that said energy is converted from thermal energy produced by a chemical reaction within said oxygen source to produce oxygen. According to this embodiment, an oxygen source as known in the art can be used to convert and supply energy to a control unit for such oxygen supply to a person.

Still further, it is preferred that said energy is converted from pressure energy stored within said oxygen source in the form of pressurized oxygen. According to this embodiment, an alternative way of oxygen storage is used to convert and supply drive energy to a control unit for such oxygen supply to a person.

Still further, said drive energy preferably is electrical drive energy. By this, electrical energy is provided to the control unit which is the usual form for energy of such a control unit.

Finally, the method may be further improved in that said drive energy is temporarily stored within a storage device. This type of energy supply method is particularly preferred in case that the energy conversion is not constant over the time of use of the oxygen breathing device, in particular in case that during an emergency not enough drive energy is converted in real time or in cases wherein in an emergency situation only initially enough and possibly even excess energy is converted and could be supplied, whereas in a later stage of the emergency situation a lack of drive energy may occur if only such energy would be provided to the control unit which is converted via the energy conversion and supply device in real time.

According to a third aspect of the invention, a particular use of a peltier element is provided in that the element is used to convert thermal energy dissipated from an oxygen source of an oxygen breathing device for persons, in particular passengers or crew members of an aircaft, to into electrical energy required as drive energy for a control unit to control mass flow and or pressure of the oxygen flow to the person.

According to this aspect of the invention, a peltier element is used for the particular improved oxygen breathing device or method according to the invention. A peltier element is particularly well-fitted for such use since it provides a low weight and efficient device for converting thermal energy into electrical energy since in a broad field of use, oxygen sources producing an exothermic reaction during oxygen supply are used and control units are used which require electrical energy for controlling the flow and/or pressure of the oxygen.

Preferred embodiments of the invention are described with reference to the accompanying figures, wherein
- Fig. 1:: is a schematical view of an oxygen breathing device according to a first embodiment of the invention,
- Fig. 2:: is a schematical view of an oxygen breathing device according to a second embodiment of the invention,
- Fig. 3:: is a schematical view of an oxygen breathing device according to a third embodiment of the invention, and
- Fig. 4:: is a schematical view of an oxygen breathing device according to a fourth embodiment of the invention.

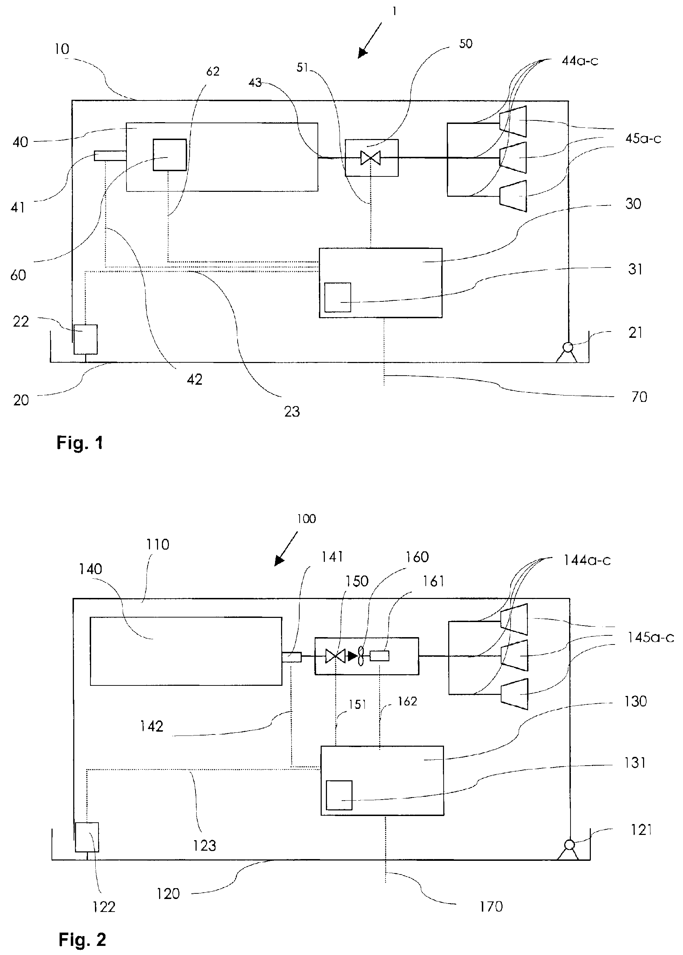

Referring first to figure 1, an oxygen breathing device 1 according to a first embodiment of the invention is encased within a housing 10 which is closed by bottom lid 20 on its bottom side. The bottom lid 20 is attached on one side via a hinge 21 to the housing 10 on the right hand side of figure 1. On the opposite side, the bottom lid 20 is secured to the housing 10 via a releasable clamp 22.

The clamp 22 is connected via a signal line 23 to a control unit 30 arranged within the housing 10. Via signal line 23 the clamp 22 can be released such that the bottom lid 20 opens following gravity force.

Further, a chemical oxygen generator 40 is arranged within the housing 10. In the chemical oxygen generator, a chemical substance is stored. Upon initiation via a chemical starter 41, the chemical substance stored within the chemical oxygen generator undergoes a chemical reaction, a product of which is oxygen.

The chemical starter 41 is connected via an electrical signal line 42 to the control unit 30 such that via an electrical signal from the control unit 30 the chemical reaction within the oxygen generator 40 can be initiated via the chemical starter 41.

The oxygen produced within the chemical oxygen generator 40 is guided via an oxygen line 43 to a flow valve 50. Having passed the flow valve 50, the oxygen is further guided via oxygen hoses 44a, b, c to oxygen masks 45a, b, c. The oxygen masks 45a, b, c are arranged such within the housing 10 that they fall down towards passengers sitting below the oxygen breathing device as soon as the bottom lid 20 opens.

The flow valve 50 is connected to the control unit 30 via a signal line 51 such that the flow of oxygen flowing through the flow valve 50 to the oxygen masks 55a-c can be controlled from the control unit 30 via the control signal line 51.

A peltier element 60 is attached to the oxygen generator 40 such that any heat produced within the oxygen generator 40 is transferred to the peltier element 60. By this, heat generated within the oxygen generator 40 by the exothermic reaction of the chemical substance stored within the oxygen generator 40 can be converted into electrical energy by the peltier element 60. The electrical energy thus generated within the peltier element 60 is transferred via a supply line 62 to the control unit 30 to drive the control unit 30. Within the control unit 30, a rechargeable battery pack 31 is provided which is able to store excess energy provided from the peltier element 60 and to drive the control unit 30 in case that the electrical energy provided by the peltier element 60 is not sufficient to drive the control unit 30.

An external signal and supply line 70 coupling the control unit 30 to the control system of an aircraft is provided. Via the signal and supply line 70 an emergency situation can be signalled to the control unit 30, thus starting the steps of releasing the clamp 22 and activating the chemical starter 41 to provide oxygen and oxygen masks to the three passengers sitting below the oxygen breathing device. It is to be understood that after initial start of the chemical reaction within the oxygen generator 40 via external signal and supply line 70 the oxygen breathing device shown in figure 1 may further work independent and self-sustaining. In particular, the oxygen breathing device is capable to control the flow through the flow control valve 50 via signal line 51 from the control unit 30 whereby the control unit 30 is supplied with electrical energy from the peltier element 60 via supply line 62.

Figure 2 shows a second embodiment of an oxygen breathing device 100 according to the invention. The second embodiment comprises a housing 110, a bottom lid 120, a control unit 130 and oxygen masks 145a-c in a similar arrangement and function like in the first embodiment and a detailed description hereto is thus omitted.

In the second embodiment, a high-pressure oxygen container 140 is provided. The oxygen container 140 is connected via a release valve 141 to a flow control valve 150.

The oxygen flowing from the high-pressure oxygen container 140 through the check valve 141 and the flow control valve 150 is directed to a turbine 160 and drives the turbine 160. Hereafter, the oxygen is guided to the oxygen masks 145a-c as described before with reference to figure 1.

The turbine 160 is mechanically coupled to a generator 161 and drives this generator 161. The generator 161 produces electrical energy which is guided via supply line 162 to the control unit 130 to supply drive energy to the control unit 130.

The shut-off valve 141 is connected via signal line 142 to the control unit 130 such that the control unit may open the shut-off valve 141 in case of an emergency and thus allow oxygen stored within the oxygen container 140 to flow via the flow control valve 150 and the turbine 160 to the oxygen masks 145a-c.

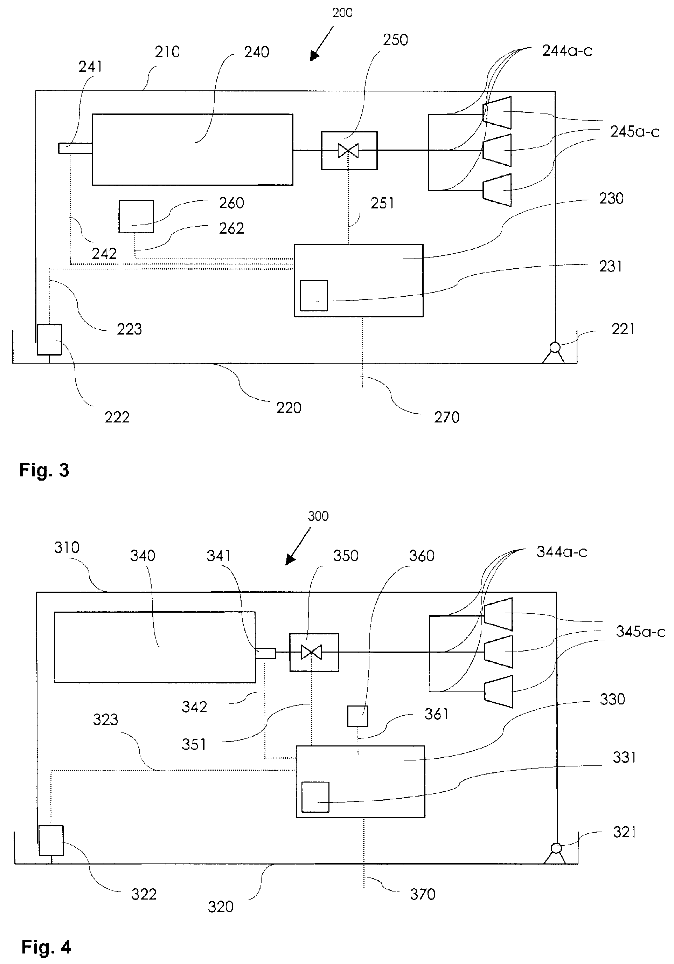

Figure 3 shows a third embodiment of an oxygen breathing device 200 according to the invention. The oxygen breathing device 200 shown in figure 3 comprises a housing 210, a bottom lid 220, a control unit 230, a chemical oxygen generator 240 and a chemical starter 241, a flow control valve 250 and oxygen masks 245a-c in a similar arrangement and function like the embodiment shown in figure 1. A detailed description of these components is thus omitted here.

An energy harvesting element 260 is provided within the housing 210. The energy harvesting element 260 is attached to the housing 210 and adapted to convert mechanical energy acting onto the housing 210 from vibrations, accelerations or the like into electrical energy. The energy harvesting element 260 may comprise an inductive coil with a moveable magnetic core arranged within the coil and biased via a mechanical spring to thus allow induction of electrical energy within the coil in case that the housing 210 and the energy harvesting element 260 is exposed to an oscillatory motion effecting movement of the core in relation to the coil.

The electrical energy generated within the energy harvesting element 260 is supplied via an energy supply line 262 to the control unit 230 and can thus be stored within a rechargeable battery pack 231 arranged within the control 230. By this, the control unit 230 can be supplied with electrical energy from the battery pack 231 in case of an emergency and can thus control independently from external signal and supply line 270 the flow control valve 250.

Referring now to figure 4, a fourth embodiment of an oxygen breathing device 300 according to the invention comprises a housing 310, a bottom lid 320, a pressurized oxygen container 340, a release valve 341, a flow control valve 350, a control unit 330 and oxygen masks 345a-c in a similar arrangement and function as the embodiment shown in figure 2. A detailed description of these components is thus omitted here.

The embodiment shown in figure 4 comprises an energy harvesting element 360 which may be constructed in the same way as described with reference to figure 3. The energy harvesting element 360 is coupled via a supply line 361 to the control unit 330 to supply energy resulting from oscillatory motion acting onto the housing and thus onto the harvesting element 360 and to allow storage of such electrical energy in a rechargeable battery pack 331 within the control unit 330. By this, the oxygen breathing device 300 shown in figure 4 may work independently and self-sustaining by receiving the electrical energy required for controlling the flow control valve 350 from the battery pack 331.

In case of a sudden pressure drop within a cabin of an aircraft, the oxygen breathing device according to the invention will work as follows. After having received an emergency signal via signal line 70, 170, 270, 370, the control unit 30, 130, 230, 330 will activate the clamp 22, 122, 222, 322 to release the bottom lid 20, 120, 220, 320.

Further, the control unit will activate the chemical starter 41, 241 or the shut-off valve 141, 341, respectively, to start oxygen generation and oxygen flow to the oxygen masks.

Hereafter, the oxygen breathing device will work independently and self-sustaining, i.e. even in case of breakdown of the signal supply line 70, 170, 270, 370, the device will ensure safe oxygen supply to the passengers using the oxygen masks. This is achieved by supplying the control unit with electrical energy from either the rechargeable battery pack within the control unit or from the peltier element or the generator. By this, the control unit can ensure that the flow and pressure of the oxygen supplied to the passengers via the oxygen masks is controlled depending on the cabin pressure and, if required, that oxygen concentration within the cabin.

It is to be understood, that the peltier element or the generator, respectively, are to be dimensioned in such a way to safely supply electrical energy sufficient to drive the control unit. At the time the invention was made, a control unit adapted to control one control valve in dependency of the cabin pressure would require approximately 5W and thus a peltier element should have a dimension of approximately 15x15mm to provide an electrical energy of approximately 8W in case of a typical temperature gradient between the oxygen generator and the temperature within the housing of the oxygen breathing device of approximately 100°-175°. In the same way, the dimension of the turbine and the generator have to be selected such that sufficient electrical energy is supplied to the control unit.

It is to be understood that various modifications and combinations of the elements defined by the invention become aware to the person skilled in the art when reading this description. In particular, the energy harvesting element shown in figures 3 and 4 may be combined with the embodiments shown in figures 1 and 2, thus allowing either constant charging of the rechargeable battery pack within the control unit and further converting energy stored within the chemical oxygen generator or the pressurized oxygen container, respectively in real time during operation of the oxygen breathing device. By this, energy supply to the control unit can be further improved and provided over a longer period of time.

Still further, it is to be understood that the chemical starter or the shut-off valve, respectively, need not be activated via the control unit but could as well be activated in another way, e.g. by a pulling force via the oxygen hoses connecting the oxygen masks to the flow control valve, e.g. by inserting an activating band into the housing between the chemical starter or the release valve, respectively, and the oxygen hoses.

Acknowledging this, the foregoing description as well as the figures are only to be understood as explanatory but not limiting preferred embodiments of the invention and the scope of protection shall only be defined by the claims as attached hereto.

## Claims

1. An oxygen breathing device for providing oxygen to passenger or crew of an aircraft, the device comprising:
- an oxygen source (40), wherein oxygen is stored, in chemically bound form or compressed form,
- an oxygen guiding device (43, 44a-c, 45a-c) for guiding oxygen from the oxygen source to a person,
- a control unit (30) for controlling pressure and/or flow rate of the oxygen flowing through the guiding device,
**characterized by** an energy conversion and supply device (60) which is adapted to
- convert energy stored or produced within the oxygen breathing device into an energy required by the control unit, and
- provide said energy required by the control unit to the control unit.

2. The oxygen breathing device according to claim 1, wherein said energy conversion and supply device is coupled to the oxygen source and is adapted to
- receive energy stored in the oxygen source,
- convert said energy stored in the oxygen source into an energy required by the control unit and
wherein said energy conversion and supply device is coupled to said control unit.

3. The oxygen breathing device according to claim 2, wherein said oxygen source is a chemical oxygen source comprising at least one or two components, said component(s) producing oxygen in a chemical reaction and wherein said energy conversion and supply device is adapted to convert heat energy generated by said chemical reaction the oxygen source into said energy required by the control unit to the control unit.

4. The oxygen breathing device according to the preceding claim, wherein said energy conversion and supply device is a peltier element in thermal contact with the oxygen source.

5. The oxygen breathing device according to claim 2, wherein said oxygen source is a pressurized oxygen source comprising oxygen in a pressurized state and wherein said energy conversion and supply device is adapted to convert pressure energy generated by relaxation of said pressurized oxygen into said drive energy required by the control unit to the control unit.

6. The oxygen breathing device according to claim 5, wherein said energy conversion and supply device comprises a turbine and a generator, wherein said turbine is
- arranged within the flow of oxygen from the oxygen source to the person and
- adapted to be driven by said pressure stored in the oxygen source and wherein said generator is
- coupled to said turbine to be driven said turbine, and
- coupled to said control unit to supply energy generated within said generator to said control unit.

7. The oxygen breathing device according to claim 1, wherein said energy conversion and supply device is adapted to convert energy produced by oscillatory motion of the oxygen breathing device or parts of it.

8. The oxygen breathing device according to any of the preceding claims, wherein said energy conversion and supply device is adapted to supply the converted energy to an energy storage device adapted to supply said control unit.

9. The oxygen breathing device according to any of the preceding claims, wherein said energy conversion and supply device is adapted to convert said energy stored in the oxygen source or produced by vibrations of the oxygen breathing device into electrical energy.

10. The oxygen breathing device according to the preceding claims 8 and 9, wherein said energy storage device is a rechargeable battery pack.

11. The oxygen breathing device according to any of the preceding claims, wherein said energy conversion and supply device is adapted to convert energy stored in the oxygen source or produced by vibrations of the oxygen breathing device or parts of it into such an amount of energy, which is sufficient to independently drive said control unit.

12. A method for supplying oxygen to a passenger or crew of an aircraft using an oxygen breathing device in an emergency situation onboard an aircraft, the method comprising the steps of:
- providing an oxygen flow from an oxygen source, which is part of the oxygen breathing device, by providing pressurized oxygen or oxygen resulting from a chemical reaction,
- controlling the flow and/or pressure of the oxygen flow in a control unit, which is part of the oxygen breathing device,
- supplying drive energy to said control unit for driving said control of the flow and/or pressure,
- guiding said oxygen flow with said controlled flow and/or pressure to said person,
**characterized by** the steps of
- converting energy stored or generated within said oxygen breathing device or parts of it into said drive energy of said control unit.

13. The method according to claim 12,
wherein said energy is converted from thermal energy produced by a chemical reaction within said oxygen source to produce oxygen.

14. The method according to claim 12,
wherein said energy is converted from pressure energy stored within said oxygen source in the form of pressurized oxygen.

15. The method according to claim 12,
wherein said energy is converted from oscillatory motion of said oxygen breathing device or parts of it.

16. The method according to any of the preceding claims 12-15,
wherein said drive energy is electrical drive energy.

17. The method according to any of the preceding claims 12-16,
wherein said drive energy is temporarily stored within a storage device.

18. Use of a peltier element as an energy conversion and supply device to convert thermal energy dissipated from an oxygen source of an oxygen breathing device according to claim 1 into electrical energy required as drive energy for a control unit to control mass flow and or pressure of the oxygen flow to the passenger or crew member, respectively.

## Patentansprüche

1. Sauerstoff-Atmungsvorrichtung zur Bereitstellung von Sauerstoff an Passagier oder Besatzung eines Luftfahrzeugs, wobei die Vorrichtung umfasst:
- eine Sauerstoffquelle (40), wobei Sauerstoff in chemisch gebundener oder komprimierter Form gelagert wird,
- eine Sauerstoff-Führungsvorrichtung (43, 44a-c, 45a-c) zum Führen von Sauerstoff von der Sauerstoffquelle zu einer Person,
- eine Steuerungseinheit (30) zur Steuerung von Druck und/oder Flussrate des Sauerstoffs, der durch die Führungsvorrichtung fließt,
**gekennzeichnet durch** eine Energieumwandlungs- und -versorgungsvorrichtung (60), die ausgebildet ist
- Energie, die innerhalb der Sauerstoff-Atmungsvorrichtung gelagert oder produziert wird, in eine Energie, die von der Steuerungseinheit benötigt wird, umzuwandeln, und
- die Energie, die von der Steuerungseinheit benötigt wird, an die Steuerungseinheit bereitzustellen.

2. Sauerstoff-Atmungsvorrichtung nach Anspruch 1, wobei die Energieumwandlungs- und -versorgungsvorrichtung mit der Sauerstoffquelle gekoppelt ist, und ausgebildet ist
- Energie, die in der Sauerstoffquelle gelagert wird, aufzunehmen,
- die Energie, die in der Sauerstoffquelle gelagert wird, in eine Energie, die von der Steuerungseinheit benötigt wird, umzuwandeln, und
wobei die Energieumwandlungs- und -versorgungsvorrichtung mit der Steuerungseinheit gekoppelt ist.

3. Sauerstoff-Atmungsvorrichtung nach Anspruch 2, wobei die Sauerstoffquelle eine chemische Sauerstoffquelle ist, die mindestens einen oder zwei Komponenten umfasst, wobei die Komponente(n) Sauerstoff in einer chemischen Reaktion produzieren und wobei die Energieumwandlungs- und -versorgungsvorrichtung ausgebildet ist, Wärmeenergie, die von der chemischen Reaktion der Sauerstoffquelle erzeugt wird, in die Energie, die von der Steuerungseinheit benötigt wird, an die Steuerungseinheit umzuwandeln.

4. Sauerstoff-Atmungsvorrichtung nach dem vorhergehenden Anspruch, wobei die Energieumwandlungs- und -versorgungsvorrichtung ein Peltierelement ist, das in thermischem Kontakt mit der Sauerstoffquelle steht.

5. Sauerstoff-Atmungsvorrichtung nach Anspruch 2, wobei die Sauerstoffquelle eine Drucksauerstoffquelle ist, die Sauerstoff in einem Zustand unter Druck umfasst und wobei die Energieumwandlungs- und -versorgungsvorrichtung ausgebildet ist, Druckenergie, die durch Entspannung des Drucksauerstoffs in die Antriebsenergie, die von der Steuerungseinheit benötigt wird, an die Steuerungseinheit umzuwandeln.

6. Sauerstoff-Atmungsvorrichtung nach Anspruch 5, wobei die Energieumwandlungs- und -versorgungsvorrichtung eine Turbine und einen Generator umfasst, wobei die Turbine
- innerhalb des Flusses von Sauerstoff von der Sauerstoffquelle zu der Person angeordnet ist und
- ausgebildet ist, von dem Druck, der in der Sauerstoffquelle gelagert wird, angetrieben zu werden und wobei der Generator
- mit der Turbine gekoppelt ist, um von der Turbine angetrieben zu werden
- mit der Steuerungseinheit gekoppelt ist, um Energie, die innerhalb des Generators erzeugt wird, an die Steuerungseinheit bereitzustellen.

7. Sauerstoff-Atmungsvorrichtung nach Anspruch 1, wobei die Energieumwandlungs- und -versorgungsvorrichtung ausgebildet ist, Energie, die durch Schwingungsbewegung der Sauerstoff-Atmungsvorrichtung oder Teilen davon produziert wird, umzuwandeln.

8. Sauerstoff-Atmungsvorrichtung nach einem der vorhergehenden Ansprüche, wobei die Energieumwandlungs- und -versorgungsvorrichtung ausgebildet ist, die umgewandelte Energie an eine Energielagerungsvorrichtung bereitzustellen, die ausgebildet ist, die Steuerungseinheit zu versorgen.

9. Sauerstoff-Atmungsvorrichtung nach einem der vorhergehenden Ansprüche, wobei die Energieumwandlungs- und -versorgungsvorrichtung ausgebildet ist, die Energie, die in der Sauerstoffquelle gelagert oder durch Vibrationen der Sauerstoffatmungsvorrichtung produziert wird, in elektrische Energie umzuwandeln.

10. Sauerstoff-Atmungsvorrichtung nach den vorhergehenden Ansprüchen 8 und 9, wobei die Energielagerungsvorrichtung ein wiederaufladbares Batteriepack ist.

11. Sauerstoff-Atmungsvorrichtung nach einem der vorhergehenden Ansprüche, wobei die Energieumwandlungs- und -versorgungsvorrichtung ausgebildet ist, Energie, die in der Sauerstoffquelle gelagert oder durch Vibrationen der Sauerstoffatmungsvorrichtung oder Teilen davon produziert wird, in solch eine Menge an Energie umzuwandeln, die ausreicht, die Steuerungseinheit unabhängig anzutreiben.

12. Verfahren zur Versorgung von Sauerstoff an einen Passagier oder Besatzung eines Luftfahrzeugs unter Verwendung einer Sauerstoff-Atmungsvorrichtung in einer Notfallsituation an Bord eines Luftfahrzeugs, wobei das Verfahren die Schritte umfasst:
- Bereitstellen eines Sauerstoffflusses von einer Sauerstoffquelle, die Teil der Sauerstoff-Atmungsvorrichtung ist, durch Bereitstellen von Drucksauerstoff oder Sauerstoff, der aus einer chemischen Reaktion resultiert,
- Steuern des Flusses und/oder Drucks des Sauerstoffflusses in einer Steuerungseinheit, die Teil der Sauerstoff-Atmungsvorrichtung ist,
- Versorgen von Antriebsenergie an die Steuerungseinheit, um die Steuerung des Flusses und/oder Drucks anzutreiben,
- Führen des Sauerstoffflusses mit dem gesteuerten Fluss und/oder Druck an die Person,
**gekennzeichnet durch** die Schritte
- Umwandeln von Energie, die innerhalb der Sauerstoff-Atmungsvorrichtung oder Teilen davon gelagert oder erzeugt wird, in die Antriebsenergie der Steuerungseinheit.

13. Verfahren nach Anspruch 12,
wobei die Energie aus thermischer Energie, die durch eine chemische Reaktion innerhalb der Sauerstoffquelle produziert wird, um Sauerstoff zu produzieren, umgewandelt wird.

14. Verfahren nach Anspruch 12,
wobei die Energie aus Druckenergie, die innerhalb der Sauerstoffquelle in Form von Drucksauerstoff gelagert wird, umgewandelt wird.

15. Verfahren nach Anspruch 12,
wobei die Energie aus Schwingungsbewegung der Sauerstoff-Atmungsvorrichtung oder Teilen davon umgewandelt wird.

16. Verfahren nach einem der vorhergehenden Ansprüche 12-15,
wobei die Antriebsenergie elektrische Antriebsenergie ist.

17. Verfahren nach einem der vorhergehenden Ansprüche 12-16,
wobei die Antriebsenergie zeitweise innerhalb einer Lagerungsvorrichtung gelagert wird.

18. Verwendung eines Peltierelements als eine Energieumwandlungs- und - versorgungsvorrichtung, um thermische Energie, die von einer Sauerstoffquelle einer Sauerstoff-Atmungsvorrichtung nach Anspruch 1 abgeführt wird, in elektrische Energie umzuwandeln, die als Antriebsenergie für eine Steuerungseinheit benötigt wird, um Massenfluss und oder Druck des Sauerstoffflusses an den Passagier oder das Besatzungsmitglied jeweils zu steuern.

## Revendications

1. Appareil respiratoire à oxygène destiné à fournir de l'oxygène aux passagers ou à l'équipage d'un avion, l'appareil comprenant :
- une source d'oxygène (40), dans laquelle de l'oxygène est stocké, sous une forme chimiquement liée ou sous une forme comprimée,
- un dispositif de guidage de l'oxygène (43, 44a-c, 45a-c) destiné à guider l'oxygène entre la source d'oxygène et une personne,
- une unité de commande (30) destinée à contrôler la pression et/ou le débit de l'oxygène qui circule dans le dispositif de guidage,
**caractérisé par** un dispositif de conversion et d'alimentation en énergie (60) qui est adapté pour
- convertir l'énergie stockée ou produite dans l'appareil respiratoire à oxygène en une énergie requise par l'unité de commande, et
- fournir ladite énergie requise par l'unité de commande à l'unité de commande.

2. Appareil respiratoire à oxygène selon la revendication 1, dans lequel ledit dispositif de conversion et d'alimentation en énergie est relié à la source d'oxygène et est adapté pour
- recevoir l'énergie stockée dans la source d'oxygène,
- convertir ladite énergie stockée dans la source d'oxygène en une énergie requise par l'unité de commande, et
dans lequel ledit dispositif de conversion et d'alimentation en énergie est relié à ladite unité de commande.

3. Appareil respiratoire à oxygène selon la revendication 2, dans lequel ladite source d'oxygène est une source d'oxygène chimique qui comprend au moins un ou deux composant(s), le(s)dit(s) composant(s) produisant de l'oxygène lors d'une réaction chimique, et dans lequel ledit dispositif de conversion et d'alimentation en énergie est adapté pour convertir l'énergie thermique générée par ladite réaction chimique dans la source d'oxygène en ladite énergie requise par l'unité de commande, et pour la fournir à l'unité de commande.

4. Appareil respiratoire à oxygène selon la revendication précédente, dans lequel ledit dispositif de conversion et d'alimentation en énergie est un élément de Peltier en contact thermique avec la source d'oxygène.

5. Appareil respiratoire à oxygène selon la revendication 2, dans lequel ladite source d'oxygène est une source d'oxygène sous pression qui comprend de l'oxygène dans un état pressurisé, et dans lequel ledit dispositif de conversion et d'alimentation en énergie est adapté pour convertir l'énergie de pression générée par le relâchement dudit oxygène sous pression en ladite énergie de commande requise par l'unité de commande, et pour la fournir à l'unité de commande.

6. Appareil respiratoire à oxygène selon la revendication 5, dans lequel ledit dispositif de conversion et d'alimentation en énergie comprend une turbine et un générateur, ladite turbine étant
- placée dans le flux d'oxygène entre la source d'oxygène et la personne, et
- adaptée pour être entraînée par ladite pression stockée dans la source d'oxygène, et dans lequel ledit générateur est
- relié à ladite turbine afin d'être entraîné par ladite turbine, et
- relié à ladite unité de commande afin de fournir l'énergie dans ledit générateur à ladite unité de commande.

7. Appareil respiratoire à oxygène selon la revendication 1, dans lequel ledit dispositif de conversion et d'alimentation en énergie est adapté pour convertir l'énergie produite par le mouvement d'oscillation de l'appareil respiratoire à oxygène ou ses pièces.

8. Appareil respiratoire à oxygène selon l'une quelconque des revendications précédentes, dans lequel ledit dispositif de conversion et d'alimentation en énergie est adapté pour fournir l'énergie convertie à un dispositif de stockage d'énergie adapté pour alimenter ladite unité de commande.

9. Appareil respiratoire à oxygène selon l'une quelconque des revendications précédentes, dans lequel ledit dispositif de conversion et d'alimentation en énergie est adapté pour convertir ladite énergie stockée dans la source d'oxygène ou produite par les vibrations de l'appareil respiratoire à oxygène en énergie électrique.

10. Appareil respiratoire à oxygène selon les revendications précédentes 8 et 9, dans lequel ledit dispositif de stockage de l'énergie est une batterie rechargeable.

11. Appareil respiratoire à oxygène selon l'une quelconque des revendications précédentes, dans lequel ledit dispositif de conversion et d'alimentation en énergie est adapté pour convertir l'énergie stockée dans la source d'oxygène ou produite par les vibrations de l'appareil respiratoire à oxygène ou ses pièces en une quantité d'énergie qui est suffisante pour entraîner indépendamment ladite unité de commande.

12. Procédé de fourniture d'oxygène à un passager un ou membre de l'équipage d'un avion qui utilise un appareil respiratoire à oxygène dans une situation d'urgence à bord d'un avion, le procédé comprenant les étapes qui consistent à :
- fournir un flux d'oxygène qui provient d'une source d'oxygène, qui fait partie de l'appareil respiratoire à oxygène, en fournissant de l'oxygène sous pression ou de l'oxygène issu d'une réaction chimique,
- réguler le débit et/ou la pression du flux d'oxygène dans une unité de commande, qui fait partie de l'appareil respiratoire à oxygène,
- fournir une énergie d'entraînement à ladite unité de commande afin de commander ladite régulation du débit et/ou de la pression,
- guider ledit flux d'oxygène avec ledit débit et/ou ladite pression régulé(e) vers ladite personne,
**caractérisé par** les étapes qui consistent à
- convertir l'énergie stockée ou générée dans ledit appareil respiratoire à oxygène ou ses pièces en ladite énergie d'entraînement de ladite unité de commande.

13. Procédé selon la revendication 12,
dans lequel ladite énergie est convertie à partir de l'énergie thermique produite par une réaction chimique dans ladite source d'oxygène afin de produire de l'oxygène.

14. Procédé selon la revendication 12,
dans lequel ladite énergie est convertie à partir de l'énergie de pression stockée dans ladite source d'oxygène sous la forme d'oxygène sous pression.

15. Procédé selon la revendication 12,
dans lequel ladite énergie est convertie à partir du mouvement d'oscillation dudit appareil respiratoire à oxygène ou de ses pièces.

16. Procédé selon l'une quelconque des revendications 12 à 15,
dans lequel ladite énergie d'entraînement est une énergie d'entraînement électrique.

17. Procédé selon l'une quelconque des revendications 12 à 16,
dans lequel ladite énergie d'entraînement est temporairement stockée dans un dispositif de stockage.

18. Utilisation d'un élément de Peltier comme dispositif de conversion et d'alimentation en énergie afin de convertir l'énergie thermique dissipée par une source d'oxygène d'un appareil respiratoire à oxygène selon la revendication 1 en énergie électrique requise comme énergie d'entraînement pour une unité de commande afin de contrôler le débit massique et/ou la pression du flux d'oxygène fourni au passager ou au membre de l'équipage, respectivement.
